# EUROPÄISCHE PATENTSCHRIFT

(11) **EP 3 802 182 B1**
(45) Veröffentlichungstag und Bekanntmachung des Hinweises auf die Patenterteilung: **11.05.2022**
(21) Anmeldenummer: 18733185.5
(22) Anmeldetag: 01.06.2018
(51) Int. Cl.: B60K 1/00, F16H 57/021, F16H 57/037, F16H 57/02, F16H 3/08

(54) **ELEKTROANTRIEBSANORDNUNG**
ELECTRIC DRIVE ASSEMBLY
ENSEMBLE D'ENTRAÎNEMENT ÉLECTRIQUE

(43) Veröffentlichungstag der Anmeldung: 14.04.2021
(73) Patentinhaber: GKN Automotive Limited, Birmingham, West Midlands B37 7YE (GB)
(72) Erfinder: BROICHER, Simon, 50354 Hürth (DE); SCHMIDT, Mark, 53639 Königswinter (DE); SZILAGYI, Ervin, 53819 Neunkirchen-Seelscheid (DE); DUDEK, Damian, 50357 Köln (DE)
(74) Vertreter: Neumann Müller Oberwalleney Patentanwälte PartG mbB
(86) Internationale Anmeldenummer: PCT/EP2018/064450
(87) Internationale Veröffentlichungsnummer: WO 2019/228639

(56) Entgegenhaltungen:
- EP-A2- 1 354 744
- WO-A1-2016/066215
- DE-A1-102009 031 869
- US-A1- 2014 135 169
- US-A1- 2015 119 181

## Beschreibung

Die Erfindung betrifft eine elektromotorische Antriebsanordnung, insbesondere für Kraftfahrzeuge. Eine elektromotorische Antriebanordnung kann als alleiniger Antrieb für ein Kraftfahrzeug vorgesehen sein. Alternativ kann in hybriden Antriebskonzepten zusätzlich zur elektromotorischen Antriebsanordnung ein Verbrennungsmotor vorgesehen sein. Die elektromotorische Antriebsanordnung und der Verbrennungsmotor können dann jeweils alleine für den Antrieb des Fahrzeugs sorgen oder gemeinsam überlagert das Kraftfahrzeug antreiben.

Aus der WO 2016/066215 A1 ist ein Elektroantrieb zum Antreiben eines Kraftfahrzeugs bekannt. Der Elektroantrieb umfasst einen Elektromotor und eine Getriebeeinheit mit einem Übersetzungsgetriebe und einem Differentialgetriebe, die in einer Gehäuseanordnung aufgenommen sind. Das Übersetzungsgetriebe umfasst eine zur Motorwelle parallele Getriebewelle zum Antreiben des Differentialgetriebes. Das Differentialgetriebe ist koaxial zum Elektromotor angeordnet und umfasst ein von der Getriebewelle antreibbares Differentialgehäuse und einen Differentialrädersatz, der ein eingeleitetes Drehmoment auf zwei Seitenwellen aufteilt. Die Gehäuseanordnung umfasst eine Zwischenwand mit einer Öffnung, durch die sich die Getriebewelle hindurch erstreckt. Eine Kupplung ist im Leistungspfad zwischen dem Differentialgehäuse und dem Differentialrädersatz vorgesehen, um eine Drehmomentübertragung nach Bedarf herzustellen oder zu unterbrechen. Die Kupplung ist koaxial zum Differentialgetriebe anordnet und mittels eines steuerbaren Aktuators betätigbar, der einen mit der Zwischenwand verbundenen Elektromagneten aufweist.

Aus der WO 2017/157479 A1 ist ein Elektroantrieb zum Antreiben einer Antriebsachse eines Kraftfahrzeugs bekannt. Der Elektroantrieb umfasst eine elektrische Maschine, eine Getriebeeinheit und eine Doppelkupplungseinheit, die in einer Gehäuseanordnung aufgenommen sind. Die Doppelkupplungseinheit ist koaxial zur elektrischen Maschine angeordnet und umfasst zwei Lamellenpakete, die ein in den Kupplungskorb eingeleitetes Drehmoment variabel auf zwei Ausgangswellen übertragen können. Die Lamellenpakete werden jeweils mittels eines zugehörigen Aktuators betätigt. Die Aktuatoren umfassen jeweils einen zur Kupplungseinheit koaxialen Ringkolben, von denen einer in einem Deckelabschnitt und der andere in einer Zwischenwand des Gehäuses axial verschiebbar einsitzt.

Aus der US 9,278,618 B2 ist ein Antriebsstrang mit einer elektrischen Antriebseinheit und einer damit antriebsverbundenen Achsgetriebeeinheit mit einer festen Übersetzung bekannt.

Weitere Elektroantriebsanordnungen sind aus der US 2014/135169 A1, der US 2015/119181 A1, der DE 10 2009 031 869 A1 und der EP 1 354 744 A2 bekannt.

Der vorliegenden Erfindung liegt die Aufgabe zu Grunde, eine Elektroantriebsanordnung zum Antreiben eines Kraftfahrzeugs bereitzustellen, die ein selektives Trennen oder Verbinden des Leistungspfades zwischen einer Antriebseinheit und einer Leistungsverzweigungseinheit ermöglicht und raumsparend baut.

Zur Lösung der Aufgabe wird eine Elektroantriebsanordnung gemäß Anspruch 1 vorgeschlagen. Diese umfasst:
eine Gehäuseanordnung mit einem ersten Gehäuseelement und einem zweiten Gehäuseelement, zwischen denen eine Zwischenplatte angeordnet ist; eine Antriebseinheit, die in dem ersten Gehäuseelement aufgenommen ist, umfassend eine Antriebswelle, die um eine erste Drehachse drehend antreibbar ist; eine Getriebeanordnung mit einer Zwischenwelle, die sich durch eine Offnung der Zwischenplatte hindurch erstreckt und von der Antriebswelle um eine zur ersten Drehachse parallele zweite Drehachse drehend antreibbar ist, und mit einer Leistungsverzweigungseinheit, die mit der Zwischenwelle antriebsverbunden ist und mit einem ersten Lager in einem Lagersitz der Zwischenplatte und einem zweiten Lager in dem zweiten Gehäuseelement um eine zur ersten Drehachse koaxiale dritte Drehachse drehbar gelagert ist; und eine steuerbare Kupplungsanordnung mit einer Kupplungseinrichtung, die ausgestaltet ist, eine Drehmomentübertragung zwischen der Antriebseinheit und der Leistungsverzweigungseinheit wahlweise herzustellen oder zu unterbrechen, und mit einer Betätigungseinrichtung zum Betätigen der Kupplungseinrichtung; wobei die Kupplungseinrichtung koaxial zur Zwischenwelle angeordnet ist, und wobei die Öffnung der Zwischenplatte einen Kupplungssitz aufweist, an dem zumindest ein Element der Kupplungsanordnung axial abgestützt ist.

Die erfindungsgemäße Antriebsanordnung weist den Vorteil auf, dass diese den gleichen oder einen nur geringfügig erweiterten axialen Bauraum einer vergleichbaren Antriebsanordnung ohne die Funktion eines selektiven Trennens des Leistungspfades zwischen einer Antriebseinheit einer Leistungsverzweigungseinheit beansprucht. Der axiale Bauraum von Antriebsanordnungen, deren Antriebswelle und Leistungsverzweigungseinheit koaxial angeordnet sind, wird unter anderem von dem Lager der Leistungsverzweigungseinheit und dem dazugehörigen Lagersitz bestimmt, die zwischen der Antriebswelle und der Leistungsverzweigungseinheit angeordnet sind. Der durch das Lager und den Lagersitz beanspruchte axiale Bauraum muss zwangsläufig von einer Getriebewelle, die die Antriebswelle und die Leistungsverzweigungseinheit antriebsmäßig verbindet, überbrückt werden. In der erfindungsgemäßen Antriebsanordnung wird dieser axiale Bauraum genutzt, um zumindest Teile der für das selektive Trennen des Leistungspfades zwischen einer Antriebseinheit der Leistungsverzweigungseinheit notwendigen Kupplungsanordnung aufzunehmen.

Die Kupplungsanordnung umfasst die Kupplungseinrichtung, kurz auch als Kupplung bezeichnet, und die Betätigungseinrichtung. Es ist vorgesehen, dass zumindest ein Element der Kupplungsanordnung gegen den Kupplungssitz der Zwischenplatte axial abgestützt, wobei das Element insbesondere auch in einem Aufnahmeraum der Zwischenplatte aufgenommen sein kann. Bei dem axial abgestützten Element kann es sich prinzipiell um ein beliebiges Element der Kupplungsanordnung handeln, beispielsweise ein Teil der Kupplung und/oder ein Teil der Betätigungseinrichtung für die Kupplung, das direkt oder indirekt gegen die Zwischenplatte axial abgestützt ist. Es ist weiter möglich, dass das axial abgestützte Element auch radial gegenüber der Zwischenplatte gelagert ist. Nach einer Ausführungsform ist die Kupplung radial innerhalb der Betätigungseinrichtung angeordnet ist. Dabei ist es für eine axial platzsparende Bauweise günstig, wenn die Kupplung zumindest teilweise eine axiale Überdeckung mit der Betätigungseinrichtung hat.

Als Leistungsverzweigungseinheit soll jede Anordnung verstanden werden, die es ermöglicht die Leistung zumindest eines Antriebselementes auf zumindest zwei Abtriebswellen aufzuteilen und insbesondere einen Drehzahlausgleich zwischen den Abtriebswellen ermöglicht. Die Leistungsverzweigungseinheit kann beispielsweise als ein Differential oder als eine Doppelreibkupplungseinheit (eTwinster) ausgeführt sein.

Als Kupplung können alle Kupplungstypen verwendet werden, welche geeignet sind, eine Drehmomentübertragung im Leistungspfad zwischen der Antriebseinheit und der Leistungsverzweigungseinheit, beispielsweise durch einen Formschluss oder einen Reibschluss zwischen zwei Elementen innerhalb des Leistungspfades, nach Bedarf herzustellen oder zu unterbrechen. In einer möglichen Ausführungsform kann die steuerbare Kupplung als Klauenkupplung ausgeführt sein. In einer weiteren Ausführungsform kann die steuerbare Kupplung als Reibkupplung, insbesondere als Lamellenkupplung, ausgeführt sein. Eine Reibkupplung hat den Vorteil, dass ein kontinuierliches Schließen der Kupplung, insbesondere bei Drehzahlunterschieden der Kupplungselemente, möglich ist und eine Schaltcharakteristik gezielt appliziert werden kann.

In einer weiteren Ausführungsform kann die Zwischenwelle über eine erste Getriebestufe mit der Antriebswelle und über eine zweite Getriebestufe mit der Leistungsverzweigungseinheit antriebsverbunden sein, wobei die Kupplung zwischen der Zwischenwelle und einer von der ersten Getriebestufe und der zweiten Getriebestufe in dem in dem Leistungsfluss zwischen der Antriebseinheit und der Leistungsverzweigungseinheit angeordnet ist. Dies ermöglicht die raumsparende Anordnung der Kupplungseinrichtung in dem zuvor beschriebenen axialen Bauraum, der durch das erste Lager der Leistungsverzweigungseinheit und den dazugehörigen Lagersitz beansprucht und durch die Zwischenwelle überbrückt wird. Hierzu kann in einer weiteren Ausführungsform die Kupplungseinrichtung vollständig axial zwischen einer Mittenebene der ersten Getriebestufe und einer Mittenebene der zweiten Getriebestufe angeordnet sein.

Als Mittenebene soll allgemein eine gedachte Ebene verstanden werden, die senkrecht zu der ersten Drehachse der Antriebswelle angeordnet ist und die axiale Erstreckung des zugehörigen Elements in zwei gleich lange Teile teilt. Für die Mittenebenen der Getriebestufen soll insbesondere die axiale Erstreckung des Kontaktbereiches zwischen den Elementen der Getriebestufe, die miteinander in Kontakt stehen, berücksichtigt werden, beispielsweise die Eingriffsbreite zweier gegenseitig in Eingriff stehender Verzahnungen.

Ist die Kupplungseinrichtung zwischen der Zwischenwelle und einer von der ersten Getriebestufe und der zweiten Getriebestufe in dem Leistungsfluss angeordnet, kann eine mögliche Ausführungsform vorsehen, dass die Kupplung ein erstes Kupplungselement, das drehfest mit der Zwischenwelle verbunden ist, und eine zweites Kupplungselement, das drehfest mit einem auf der Zwischenwelle drehbar gelagerten Element der ersten oder der zweiten Getriebestufe verbunden ist, aufweist, wobei zumindest eines von dem ersten Kupplungselement und dem zweiten Kupplungselement in axialer Richtung bewegbar ist. Es ist auch denkbar, dass entweder das erste Kupplungselement einteilig mit der Zwischenwelle oder das zweite Kupplungselement einteilig mit einem auf der Zwischenwelle drehbar gelagerten Element der ersten oder der zweiten Getriebestufe ausgeführt ist.

Die Betätigung der Kupplungseinrichtung erfolgt mittels der steuerbaren Betätigungseinrichtung, die auch als Aktuator bezeichnet werden kann. Der Aktuator kann auf eines der Kupplungselemente einwirken, sodass zumindest eines von dem erste Kupplungselement und dem zweite Kupplungselement in axialer Richtung reversibel in eine Offenstellung, in der das erste Kupplungselement und das zweite Kupplungselement um die zweite Drehachse frei gegeneinander drehen können, und in eine Schließstellung, in der das erste und zweite Kupplungselement zur Drehmomentübertragung miteinander verbunden sind, bewegbar ist.

Der Aktuator zum Betätigen der Kupplung kann beliebig gestaltet sein, beispielsweise in Form eines elektromotorisch, elektromagnetisch oder hydraulisch betätigbaren Aktuators. Nach einer beispielhaften Ausführungsform umfasst der Aktuator einen Antrieb und eine Übertragungseinheit zur Übertragung einer von dem Antrieb erzeugten Kraft auf die Kupplung. Eine Übertragungseinheit kann insbesondere ein an dem Kupplungssitz axial abgestütztes Stützelement und ein hierzu axial bewegliches Stellelement, das gegen eines von dem ersten Kupplungselement und dem zweiten Kupplungselement axial abgestützt ist, umfassen. Die Übertragungseinheit kann insbesondere mit einem Rampenmechanismus ausgeführt sein, der koaxial zur zweiten Drehachse angeordnet ist und eine vom Antrieb erzeugte Drehbewegung in eine translatorische Bewegung übersetzt. Dabei können das Stützelement und das Stellelement insbesondere ringförmig, das heißt als Stützring beziehungsweise Stellring ausgeführt sein. Zumindest eines von dem Stützelement und dem Stellelement kann eine über den Umfang variable Stützfläche aufweisen. Auf diese Weise bewirkt ein relatives Verdrehen des einen Elements gegenüber dem anderen Element eine axiale Bewegung des Stellelements. In weiterer Konkretisierung können die Elemente jeweils Kugelrillen mit variabler Tiefe über dem Umfang aufweisen, in denen Kugeln aufgenommen sind, wobei das Stellelement und das Stützelement über die Kugeln gegeneinander axial abgestützt sind. Es ist allerdings grundsätzliche jeder Aktuator denkbar, der eines der beiden Kupplungselemente linear bewegen kann, beispielsweise ein Spindeltrieb, ein Hubmagnet oder eine hydraulische Stellanordnung.

Um ein reversibles Bewegen eines der Kupplungselemente zu ermöglichen, kann der Aktuator so ausgeführt sein, dass dieser doppeltwirkend das Kupplungselement sowohl in eine Richtung als auch in eine dazu entgegengesetzte Richtung bewegen kann. In einer alternativen Ausführungsform kann eines des ersten Kupplungselements und des zweiten Kupplungselements durch eine Rückstellfeder beaufschlagt werden und durch den Aktuator entgegen einer Rückstellkraft der Rückstellfeder bewegbar sein. Hierdurch kann ein weniger komplexer Aktuator verwendet werden, da dieser das Kupplungselement nur einfachwirkend bewegen muss. Es ist allerdings auch denkbar, dass der Aktuator doppeltwirkend ausgeführt ist und eine Rückstellfeder vorgesehen ist. Dies kann beispielweise zweckdienlich sein, wenn die Schaltdauer von einer von der Offenstellung und der Schließstellung möglichst gering gehalten oder die Kupplung bei Ausfall des Aktuators in eine definierte Schaltposition überführt werden soll.

In einer möglichen Ausführungsform kann die Zwischenplatte einen umlaufenden Flanschabschnitt aufweisen, über den das erste Gehäuseelement und das zweite Gehäuseelement miteinander verbunden sind, wobei eine Mittenebene des Flanschabschnitts gegenüber zumindest einer von einer Mittenebene des Lagersitzes und einer Mittenebene des Kupplungssitzes einen axialen Abstand aufweist. Die für die Bestimmung der Mittenebenen des Lagersitzes und des Kupplungssitzes jeweils relevante axiale Erstreckung wird jeweils durch die Flächen definiert, die im Kontakt mit dem jeweiligen durch den Lagersitz beziehungsweise den Kupplungssitz aufgenommenen Element stehen. Hierdurch ergibt sich in einem Längsschnitt zumindest in Teilbereichen eine konvex/konkave Form der Zwischenplatte, die zu einer Versteifung der Zwischenplatte führt. Insbesondere kann somit die Deformation der Zwischenplatte durch die teilweise erheblichen Lagerkräfte des ersten Lagers der Leistungsverzweigungseinheit, das in einem Lagersitz der Zwischenplatte aufgenommen ist, verringert werden. Der durch das erste Lager und den dazugehörigen Lagersitz beanspruchte axiale Bauraum und dadurch die axiale Gesamtlänge der Antriebsanordnung können somit verringert werden.

Zur Erhöhung der Versteifung der Zwischenplatte, kann in einer möglichen Ausführungsform die Mittenebene des Lagersitzes auf der Seite der Mittenebene des Flanschabschnitts angeordnet sein, die der Leistungsverzweigungseinheit zugewandt ist. Durch diese Ausgestaltung wird die Zwischenplatte durch die Lagerkraft des ersten Lagers auf Druck belastet.

In einer weiteren Ausführungsform kann die Mittenebene des Lagersitzes zwischen der Mittenebene des Flanschabschnitts und der Mittenebene des Kupplungssitzes angeordnet sein, oder die Mittenebene des Kupplungssitzes kann zwischen der Mittenebene des Flanschabschnitts und der Mittenebene des Lagersitzes angeordnet sein. Es ergibt sich somit in einem Längsschnitt eine gekröpfte Form der Zwischenplatte, die es ermöglicht, bauraumsparend die Zwischenplatte um die Leistungsverzweigungseinheit und die Kupplungsanordnung zumindest teilweise in axialer Überdeckung mit der Leistungsverzweigungseinheit anzuordnen.

In einer weiteren Ausführungsform kann zumindest eine von der Mittenebene des Lagersitzes und der Mittenebene des Flanschabschnitts in axialer Überdeckung mit zumindest einem Element der Kupplungsanordnung angeordnet sein.

In einer weiteren Ausführungsform kann in der Öffnung der Zwischenplatte, die den Kupplungssitz aufweist und durch welche die Zwischenwelle hindurchgeführt ist, ein Dichtelement angeordnet sein. Hierdurch wird der durch die Gehäuseanordnung gebildete Raum, in dem die Getriebeanordnung aufgenommen ist, in zwei separate Teilbereiche untergliedert, in den jeweils ein Ölbad vorgesehen sein kann, wobei die Niveaus und/oder Ölsorten der Ölbäder an die jeweils in den Teilbereichen enthaltenen Getriebestufen angepasst werden können.

In den folgenden Figurendarstellungen wird ein bevorzugtes Ausführungsbeispiel erläutert. Darin zeigt
- Figur 1: eine erfindungsgemäße Antriebsanordnung in einer perspektivischen Ansicht;
- Figur 2: die Antriebsanordnung aus Figur 1 in einem Längsschnitt entlang des Schnittverlaufs II - II;
- Figur 3: eine vergrößerte Darstellung der Kupplungsanordnung aus Figur 2 mit den daran angrenzenden Bauteilen;
- Figur 4a: die Zwischenplatte der Antriebsanordnung aus Figur 1 in einer ersten perspektivischen Ansicht;
- Figur 4b: die Zwischenplatte aus Figur 4a zusammen mit dem Zwischenrad und dem Aktuatormotor der Betätigungseinrichtung; und
- Figur 5: die Zwischenplatte der Antriebsanordnung aus Figur 1 in einer zweiten perspektivischen Ansicht.

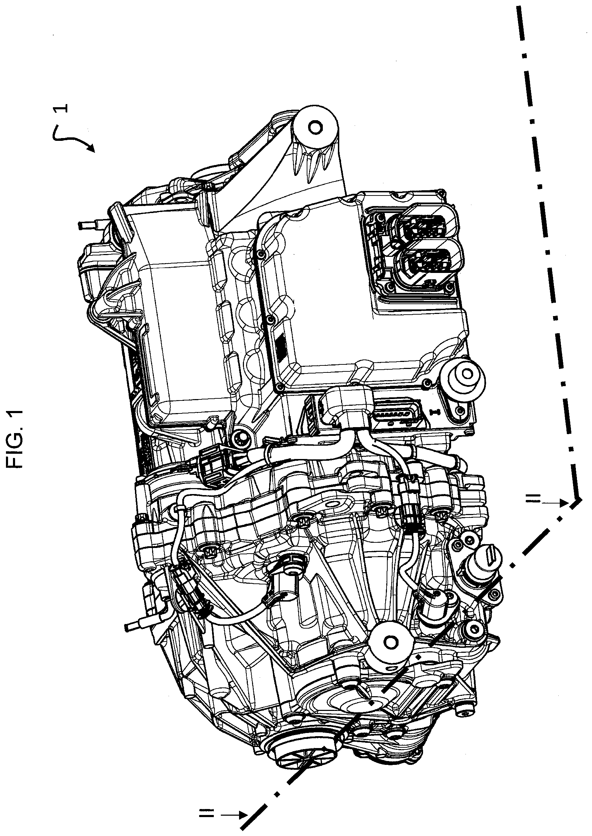

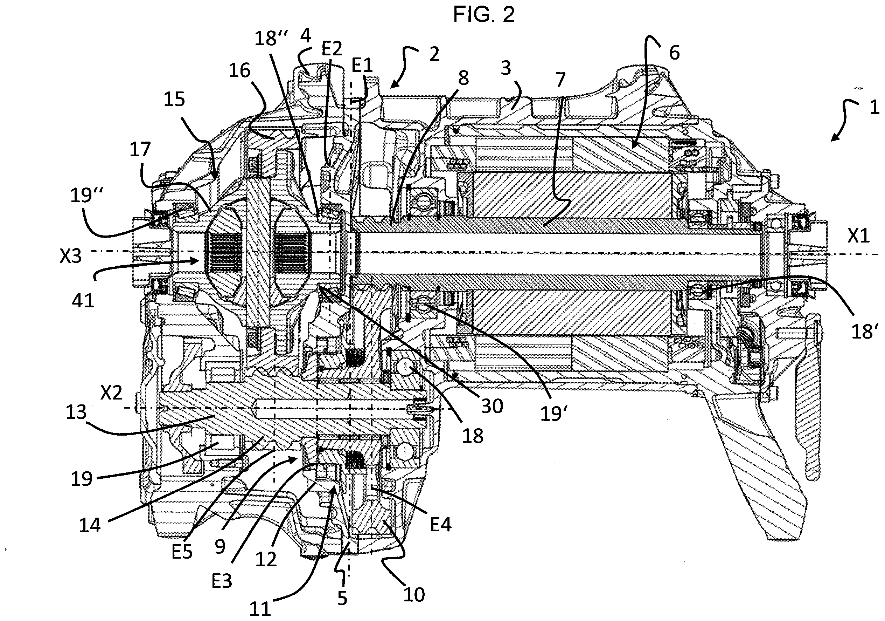

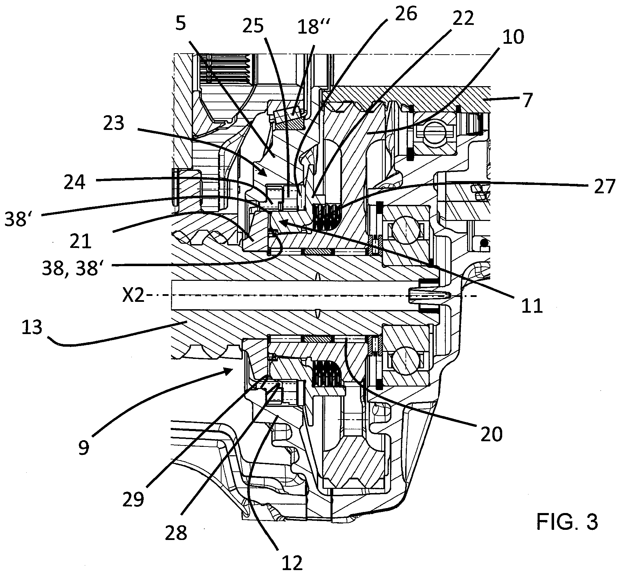

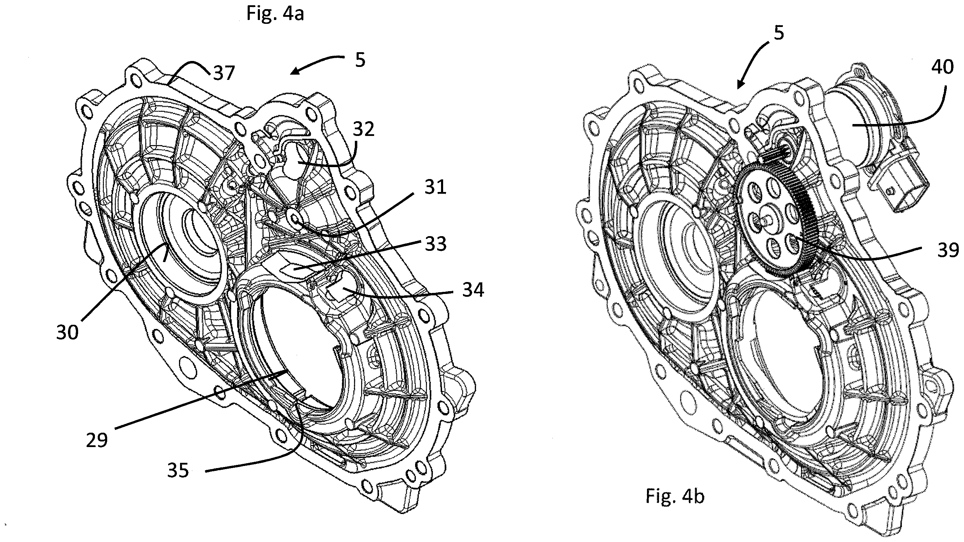

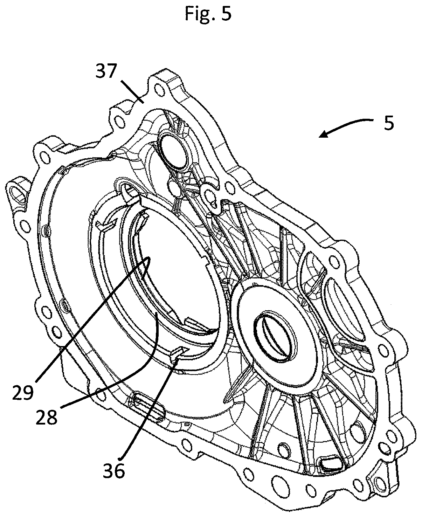

Die Figuren 1 bis 5, die im Folgenden gemeinsam beschrieben werden, zeigen eine Antriebsanordnung 1 für das elektromotorische Antreiben eines Fahrzeuges. Eine elektrische Maschine 6 ist in einem ersten Gehäuseelement 3 einer Gehäuseanordnung 2 aufgenommen und umfasst eine um eine Drehachse X1 drehend antreibbare Motorwelle 7. Die Motorwelle 7 weist an einem Wellenende ein Antriebsritzel 8 auf, dass zusammen mit einem verzahnten Antriebsrad 10 eine erste Getriebestufe bildet.

Das Antriebsrad 10 ist mit einem Lager 20, beispielsweise einem Nadellager, drehend auf einer Zwischenwelle 13 gelagert und kann über eine Kupplungsanordnung 11 wahlweise mit dieser zur Übertragung eines Drehmoments verbunden oder von dieser getrennt werden. Die Zwischenwelle 13 umfasst zudem ein Antriebsritzel 14, das in den Wellenkörper der Zwischenwelle 13 integriert ist und zusammen mit einem Ringrad 16 eine zweite Getriebestufe bildet. Das Ringrad 16 ist fest mit einem Differentialgehäuse 17 einer Differentialanordnung 15 verbunden. Die Differentialanordnung 15 umfasst zudem einen Differentialrädersatz 41, der innerhalb des Differentialgehäuses 17 angeordnet ist und mit dem nicht dargestellte Abtriebswellen verbindbar sind.

Die Getriebeanordnung aus Antriebsritzel 8, Antriebsrad 10, Kupplungsanordnung 11, Zwischenwelle 13, Ringrad 16 und Differentialanordnung 15 ist in einem Gehäuseraum angeordnet, der durch das erste Gehäuseelement 3, die Zwischenplatte 5 und das zweite Gehäuseelement 4 gebildet wird. Dabei sind die erste Getriebestufe (8, 10) und die zweite Getriebestufe (14, 16) auf unterschiedlichen Seiten der Zwischenplatte 5 angeordnet.

Die Zwischenwelle 13 ist mit einem ersten Lager 18, das in dem ersten Gehäuseelement 3 aufgenommen ist, und mit einem zweiten Lager 19, das in dem zweiten Gehäuseelement 4 aufgenommen ist, um die Drehachse X2 gelagert. Die Drehachse X2 ist dabei um den Betrag des Achsabstandes der ersten Getriebestufe parallel versetzt zur Drehachse X1 der Motorwelle 7 angeordnet. Die Zwischenwelle 13 erstreckt sich durch eine Öffnung 9 der Zwischenplatte 5 hindurch.

Die Differentialanordnung 15 ist mit einem ersten Lager 18", dass in einem Lagersitz 30 der Zwischenplatte 5 aufgenommen ist, und einem zweiten Lager 19", dass in dem zweiten Gehäuseelement 4 aufgenommen ist, um eine Drehachse X3 gelagert. Die Drehachse X3 ist dabei koaxial zu der Drehachse X1 der Motorwelle 7 angeordnet.

Der Gehäuseraum, in dem die Getriebeanordnung aufgenommen ist, wird durch die Zwischenplatte 5 in zwei Teilbereiche unterteilt, die über die Öffnung 9 im Bereich der Kupplungsanordnung 11 miteinander verbunden sind, wobei in dem ersten Teilbereich die erste Getriebestufe (8, 10) und in dem zweiten Teilbereich die zweite Getriebestufe (14, 16) angeordnet sind. Es ist auch denkbar, dass in der Öffnung 9 der Zwischenplatte 5 ein Dichtelement angeordnet wird, sodass die beiden Teilbereich voneinander getrennt sind. Somit könnte in den beiden Teilbereichen jeweils ein separates Ölbad vorgesehen werden, dessen Niveau und/oder Ölsorte an die jeweilige Getriebestufe angepasst ist.

Die Kupplungsanordnung 11 weist eine Kupplungseinrichtung 42 mit einem axial feststehenden Kupplungselement 21 und einem axial beweglichen Kupplungselement 22 auf. Das axial feststehende Kupplungselement 21 ist an einem Absatz der Zwischenwelle 13 axial abgestützt und mit der Zwischenwelle 13 über eine Presspassung, ohne darauf beschränkt zu sein, drehfest verbunden. Das axial feststehende Kupplungselement 21 weist umlaufend sich axial erstreckend Kupplungszähne 38' auf, die komplementär zu Kupplungszähnen 38' des axial beweglichen Kupplungselementes 22 ausgeführt sind, sodass das feststehende Kupplungselement 21 und das axial beweglichen Kupplungselementes 22 zusammen eine Klauenkupplung bilden. Das bewegliche Kupplungselement 22 ist drehfest und axial verschiebbar auf einem zylindrischen Absatz des Antriebsrades 10 angeordnet. Durch Verschieben des beweglichen Kupplungselementes 22 in axialer Richtung können die Kupplungszähne 38, 38' des beweglichen Kupplungselementes 22 und des feststehenden Kupplungselements 21 wahlweise gegenseitig in Eingriff gebracht werden, sodass das der Rotationsfreiheitsgrad des Antriebsrades 10 um die Drehachse X2 gefesselt ist und ein Drehmoment vom Antriebsrad 10 auf die Zwischenwelle 13 übertragen werden kann, oder außer Eingriff gebracht werden, sodass der Rotationsfreiheitsgrad des Antriebsrades 10 um die Drehachse X2 freigegeben ist und kein Drehmoment vom Antriebsrad 10 auf die Zwischenwelle 13 übertragen werden kann.

Die axiale Bewegung des beweglichen Kupplungselementes 22 erfolgt durch eine Betätigungseinrichtung 23, die einen Antrieb 40 und eine Übertragungseinheit 43 mit einem Rampenmechanismus aufweist. Es ist erkennbar, dass die Betätigungseinrichtung 23 koaxial zur Kupplung 42, und zwar radial um die beiden Kupplungselemente 21, 22 herum angeordnet ist. Die Übertragungseinheit 43 umfasst vorliegend ein Stützelement in Form eines Stützrings 24, der an der Zwischenplatte 5 axial abgestützt ist, und ein Stellelement in Form eines Stellrings 25, der axial beweglich ist. Der Stützring 24 und/oder der Stellring 25 haben eine entsprechende Nockenkontur in Umfangsrichtung, welche eine relative Drehbewegung zwischen Stützring 24 und Stellring 25 in eine translatorische Bewegung des Stellrings 25 übersetzt. Insofern können die Ringe auch als Nockenringe bezeichnet werden. Es ist ferner ein Axiallager 26 vorgesehen, über das der Stellring 25 gegen das bewegliche Kupplungselement 22 axial abgestützt ist. Das axial bewegliche Kupplungselement 22 hat einen Hülsenabschnitt, auf dem der Stellring 25 und das Axiallager 26 angeordnet sind, und einen Flanschabschnitt, gegen den das Axiallager 26 axial abgestützt ist. Der Stützring 24 sitzt vorliegend in einem Kupplungssitz 12, der durch die Öffnung 9 der Zwischenplatte 5 gebildet wird und ist gegen eine axiale Stützfläche 28 der Zwischenplatte 5 axial abgestützt. Dabei ist der Stützring 24 in axialer Überdeckung mit dem ersten und zweiten Kupplungselement 21, 22, so dass die Anordnung insgesamt platzsparend baut. Der Stützring 24 ist zudem über eine Umfangsfläche an einer radialen Stützfläche 29 des Kupplungssitzes 12 radial positioniert. Es ist auch denkbar, dass die radiale Positionierung des Stützrings 24 durch eine Lagerung auf einem der Elemente der Kupplungsanordnung 11, der Zwischenwelle 13 oder dem Antriebsrad 13 erfolgt.

Der Stützring 24 kann über ein Zwischenrad 39, das in einer Lagerstelle 31 in der Zwischenplatte 5 gelagert ist und durch eine Öffnung 33 in dem Kupplungssitz 12 mit dem Stützring 24 antriebsmäßig verbunden ist, verdreht werden. Das Zwischenrad 39 ist seinerseits antriebsmäßig mit einem Aktuatormotor 40, verbunden, der in einer Lagerstelle 32 in der Zwischenplatte 5 aufgenommen ist. Es ist auch jede andere Ausgestaltung der Übertragungseinheit 43 möglich, die einen linearen Antrieb ermöglicht, beispielsweise ein Spindeltrieb oder ein Hubmagnet.

Ausgehend von einer Schließstellung, in der das axial bewegliche Kupplungselement 22 und das feststehende Kupplungselementes 21 zur Drehmomentübertragung über die jeweils zugehörigen Kupplungszähne 38, 38' drehfest miteinander verbunden sind, wandern die Kontaktstellen zwischen Stützring 24 und Stellring 25 durch Verdrehen des Stützrings 24 von der axialen Stützfläche 28 des Kupplungssitzes 12 weg, so dass der Stellring 25 dementsprechend ebenfalls von der axialen Stützfläche 28 weg bewegt wird. Der Stellring 25, der auch als Zwischenring bezeichnet werden kann, ist drehfest und axial beweglich in einem Aufnahmeraum der Zwischenplatte 5 geführt. Zur drehfesten Halterung weist die Zwischenplatte 5 mehrere umfangsverteilte Ausnehmungen 36 auf, in die der Stellring 25 mit entsprechenden radialen Vorsprüngen eingreift. Zwischen dem drehfest im Raum angeordneten Stellring 25 und dem beweglichen Kupplungsteil 22, das mit der jeweiligen Drehzahl des Antriebsrades 10 dreht, ist ein Axiallager 26 angeordnet, um den Drehzahlunterschied auszugleichen. Die Bewegung des Stellrings 25 wird über das Axiallager 26 auf das bewegliche Kupplungsteil 22 übertragen, sodass die Kupplungszähne 38, 38' des beweglichen Kupplungselementes 22 und des feststehenden Kupplungselements 21 außer Eingriff kommen und in einer Offenstellung das bewegliche Kupplungselement 22 und das feststehende Kupplungselementes 21 frei gegeneinander drehen können.

Ausgehend von der Offenstellung, können die Kontakt- beziehungsweise Abstützstellen der beiden Ringe 24, 25 durch Verdrehen des Stützrings 24 in die entgegengesetzte Drehrichtung oder je nach Ausgestaltung des Rampenmechanismus in die gleiche Drehrichtung in Richtung der axialen Stützfläche 28 des Kupplungssitzes 12 verschoben werden. Durch eine Rückstellfeder 27 wird das bewegliche Kupplungselement 22 dabei in die Richtung axialen Stützfläche 28 verschoben, bis wiederum die Kupplungszähne 38, 38'des beweglichen Kupplungselementes 22 und des feststehenden Kupplungselements 21 in der Schließstellung gegenseitig in Eingriff kommen.

Die Drehbewegung des Stützrings 24 wird jeweils durch einen Endanschlag 35 in der Zwischenplatte 5 in beide Drehrichtungen begrenzt und kann durch einen nicht dargestellten Positionssensor, der in einer Lagerstelle 34 der Zwischenplatte 5 aufgenommen ist, erfasst werden.

Die Kupplungseinrichtung 42 ist vollständig zwischen einer Mittenebene E4 der ersten Getriebestufe und einer Mittenebene E5 der zweiten Getriebestufe angeordnet. Dabei ist die Kupplungseinrichtung 42 zumindest teilweise in axialer Überdeckung mit dem ersten Lager 18" der Differentialanordnung 15 angeordnet, sodass der durch das erste Lager 18" der Differentialanordnung 15 beanspruchte axiale Bauraum durch die Kupplungseinrichtung 42 ebenfalls genutzt wird.

Die Zwischenplatte 5 weist einen umlaufenden Flanschabschnitt 37 auf über den das erste Gehäuseelement 3 und das zweite Gehäuseelement 4 der Antriebsanordnung 2 miteinander verbunden sind. Eine Mittenebene E2 des Lagersitzes 30 des ersten Lagers 18" der Differentialanordnung 15 ist zwischen der Mittenebene E1 des Flanschabschnittes 37 und der Mittenebene E3 des Kupplungssitzes 12 angeordnet. Die Mittenebene E2 ist in axialer Überdeckung mit zumindest einem Teil der Kupplungsanordnung 11 und/oder mit einem Teil der Betätigungsrichtung 23. Die Zwischenplatte 5 weist somit eine weitgehend konvex/konkave Form auf, was zu einer Versteifung der Zwischenplatte 5 führt. Diese Versteifung kann durch eine Vielzahl von Verrippungen weiter erhöht werden. Zudem weist die Zwischenplatte eine gekröpfte Form auf, dadurch, dass die Mittenebene E3 des Kupplungssitzes 12 differentialseitig der Mittenebene E2 des Lagersitzes 30 angeordnet ist. Hierdurch wird der Kupplungssitz 12 außerhalb des axialen Bauraums, der durch das erste Lager 18" der Differentialanordnung 15 beansprucht wird, positioniert und Raum für die Anordnung der Kupplungseinrichtung 42 geschaffen.

### Bezugszeichenliste

- 1: Elektroantriebsanordnung
- 2: Gehäuseanordnung
- 3: Gehäuseelement
- 4: Gehäuseelement
- 5: Zwischenplatte
- 6: Elektrische Maschine
- 7: Motorwelle
- 8: Antriebsritzel
- 9: Öffnung
- 10: Antriebsrad
- 11: Kupplungsanordnung
- 12: Kupplungssitz
- 13: Zwischenwelle
- 14: Antriebsritzel
- 15: Differentialanordnung
- 16: Ringrad
- 17: Differentialgehäuse
- 18, 18', 18": Lager
- 19, 19', 19": Lager
- 20: Nadellager
- 21: Feststehendes Kupplungselement
- 22: Bewegliches Kupplungselement
- 23: Betätigungseinrichtung
- 24: Stützring
- 25: Stellring
- 26: Axiallager
- 27: Federelement
- 28: Axiale Lagerfläche
- 29: Radiale Lagerfläche
- 30: Lagersitz
- 31: Lagerstelle Zwischenrad
- 32: Lagerstelle Aktuatormotor
- 33: Öffnung für Aktuatorrad
- 34: Lagerstelle Positionssensor
- 35: Endanschlag Stützring
- 36: Ausnehmung für Verdrehsicherung
- 37: Flanschabschnitt
- 38, 38': Kupplungszähne
- 39: Zwischenrad
- 40: Aktuatormotor
- 41: Differentialrädersatz
- 42: Kupplungseinrichtung
- 43: Übertragungseinheit

- E: Mittenebene
- X: Drehachse

## Patentansprüche

1. Elektroantriebsanordnung zum Antreiben eines Kraftfahrzeugs, umfassend:
eine Gehäuseanordnung (2) mit einem ersten Gehäuseelement (3) und einem zweiten Gehäuseelement (4), zwischen denen eine Zwischenplatte (5) angeordnet ist;
eine Antriebseinheit (6), die in dem ersten Gehäuseelement (3) aufgenommen ist, umfassend eine Antriebswelle (7), die um eine erste Drehachse (X1) drehend antreibbar ist;
eine Getriebeanordnung mit einer Zwischenwelle (13), die durch eine Öffnung (9) der Zwischenplatte (5) hindurchgeführt und von der Antriebswelle (7) um eine zur ersten Drehachse (X1) parallele zweite Drehachse (X2) drehend antreibbar ist, und mit einer Leistungsverzweigungseinheit (15), die mit der Zwischenwelle (13) antriebsverbunden ist und mit einem ersten Lager (18") in einem Lagersitz (30) der Zwischenplatte (5) und einem zweiten Lager (19") in dem zweiten Gehäuseelement (4) um eine zur ersten Drehachse (X1) koaxiale dritte Drehachse (X3) drehbar gelagert ist; und
eine steuerbare Kupplungsanordnung (11) mit einer Kupplungseinrichtung (42), die ausgestaltet ist, um eine Drehmomentübertragung zwischen der Antriebseinheit (6) und der Leistungsverzweigungseinheit (15) wahlweise herzustellen oder zu unterbrechen, und mit einer Betätigungseinrichtung (23) zum Betätigen der Kupplungseinrichtung (42);
**dadurch gekennzeichnet,**
**dass** die Kupplungseinrichtung (42) koaxial zur Zwischenwelle (13) angeordnet ist, und die Öffnung (9) der Zwischenplatte (5) einen Kupplungssitz (12) aufweist, an dem zumindest ein Element der Kupplungsanordnung (11) axial abgestützt ist.

2. Antriebsanordnung nach Anspruch 1,
**dadurch gekennzeichnet,**
**dass** die Zwischenwelle (13) über eine erste Getriebestufe (8,10) mit der Antriebswelle (7) und über eine zweite Getriebestufe (14,16) mit der Leistungsverzweigungseinheit (15) antriebsverbunden ist, wobei
die Kupplungseinrichtung (42) zwischen der Zwischenwelle (13) und einer von der ersten Getriebestufe (8, 10) und der zweiten Getriebestufe (14, 16) in dem Leistungsfluss zwischen der Antriebseinheit (6) und der Leistungsverzweigungseinheit (15) angeordnet ist.

3. Antriebsanordnung nach einem der Ansprüche 1 bis 2,
**dadurch gekennzeichnet,**
**dass** die Kupplungseinrichtung (42) vollständig axial zwischen einer Mittenebene (E4) der ersten Getriebestufe (8,10) und einer Mittenebene (E5) der zweiten Getriebestufe (14, 16) angeordnet ist.

4. Antriebsanordnung nach einem der Ansprüche 2 oder 3,
**dadurch gekennzeichnet,**
**dass** die Kupplungseinrichtung (42) ein erstes Kupplungselement (21), das drehfest mit der Zwischenwelle (13) verbunden ist, und
ein zweites Kupplungselement (22), das drehfest mit einem auf der Zwischenwelle (13) drehbar gelagerten Element der ersten Getriebestufe (8,10) oder der zweiten Getriebestufe (14, 16) verbunden ist, aufweist,
wobei zumindest eines von dem ersten Kupplungselement (21) und dem zweiten Kupplungselement (22) in axialer Richtung reversibel in eine Offenstellung, in der das erste Kupplungselement (21) und das zweite Kupplungselement (22) um die zweite Drehachse (X2) frei gegeneinander drehen können, und in eine Schließstellung, in der das erste Kupplungselement (21) und zweite Kupplungselement (22) zur Drehmomentübertragung miteinander verbunden sind, bewegbar ist.

5. Antriebsanordnung nach einem der Ansprüche 1 bis 4,
**dadurch gekennzeichnet,**
**dass** die Betätigungseinrichtung (23) einen steuerbaren Antrieb (40) und eine Übertragungseinheit (43) zur Übertragung einer von dem Antrieb (40) erzeugten Kraft auf die Kupplungseinrichtung (42) umfasst.

6. Antriebsanordnung nach Anspruch 5,
**dadurch gekennzeichnet,**
**dass** die Übertragungseinheit (43) ein Stützelement (24) aufweist, das an dem Kupplungssitz (12) der Zwischenplatte (5) axial abgestützt ist, und
ein hierzu axial bewegbares Stellelement (25), das gegen eines von dem ersten Kupplungselement und dem zweiten Kupplungselement (22) axial abgestützt ist.

7. Antriebsanordnung nach Anspruch 6,
**dadurch gekennzeichnet,**
**dass** eines von dem ersten Kupplungselement (21) und dem zweite Kupplungselement (22) durch eine Rückstellfeder (27) beaufschlagt wird und durch das Stellelement (25) entgegen einer Rückstellkraft der Rückstellfeder (27) bewegbar ist.

8. Antriebsanordnung nach einem der Ansprüche 1 bis 7,
**dadurch gekennzeichnet,**
**dass** die Kupplungseinrichtung (42) als Klauenkupplung ausgeführt ist.

9. Antriebsanordnung nach einem der Ansprüche 1 bis 7,
**dadurch gekennzeichnet,**
**dass** die Kupplungseinrichtung (42) als Reibkupplung, insbesondere als Lamellenkupplung, ausgeführt ist.

10. Antriebsanordnung nach einem der Ansprüche 1 bis 9,
**dadurch gekennzeichnet,**
**dass** die Zwischenplatte (5) einen umlaufenden Flanschabschnitt (37) aufweist, über den das erste Gehäuseelement (3) und das zweite Gehäuseelement (4) miteinander verbunden sind,
wobei eine Mittenebene (E1) des Flanschabschnitts gegenüber zumindest einer von einer Mittenebene (E2) des Lagersitzes (30) und einer Mittenebene (E3) des Kupplungssitzes (12) einen axialen Abstand aufweist.

11. Antriebsanordnung nach Anspruch 10,
**dadurch gekennzeichnet,**
**dass** die Mittenebene (E2) des Lagersitzes (30) relativ zur Mittenebene (E1) des Flanschabschnitts (37) in Richtung Leistungsverzweigungseinheit (15) versetzt angeordnet ist.

12. Antriebsanordnung nach einem der Ansprüche 10 oder 11,
**dadurch gekennzeichnet,**
**dass** die Mittenebene (E2) des Lagersitzes (30) zwischen der Mittenebene (E1) des Flanschabschnitts (37) und der Mittenebene (E3) des Kupplungssitzes (12) angeordnet ist oder
**dass** die Mittenebene (E3) des Kupplungssitzes (12) zwischen der Mittenebene (E1) des Flanschabschnitts (37) und der Mittenebene (E2) des Lagersitzes (30) angeordnet ist.

13. Antriebsanordnung nach einem der Ansprüche 10 bis 12,
**dadurch gekennzeichnet,**
**dass** zumindest eine von der Mittenebene (E2) des Lagersitzes (30) und der Mittenebene (E1) des Flanschabschnitts (37) in axialer Überdeckung mit zumindest einem Element der Kupplungsanordnung (11) angeordnet ist.

14. Antriebsanordnung nach einem der Ansprüche 1 bis 13,
**dadurch gekennzeichnet,**
**dass** in der Öffnung (9) der Zwischenplatte (5) ein Dichtelement angeordnet ist.

15. Antriebsanordnung nach einem der Ansprüche 1 bis 14,
**dadurch gekennzeichnet,**
**dass** die Kupplungseinrichtung (42) radial innerhalb der Betätigungseinrichtung (23) angeordnet ist.

## Claims

1. An electric drive assembly for driving a motor vehicle, comprising:
a housing arrangement (2) with a first housing element (3) and a second housing element (4) between which an intermediate plate (5) is arranged;
a drive unit (6) accommodated in the first housing element (3), comprising a drive shaft (7) which is rotatingly drivable about a first axis of rotation (X1);
a transmission arrangement with an intermediate shaft (13) which extends through an opening (9) in the intermediate plate (5) and is rotatingly drivable by the drive shaft (7) about a second axis of rotation (X2) parallel to the first axis of rotation (X1), and with a power split unit (15) which is drivingly connected to the intermediate shaft (13) and is rotatably supported by a first bearing (18") in a bearing seat (30) of the intermediate plate (5) and a second bearing (19") in the second housing element (4) about a third axis of rotation (X3) coaxial to the first axis of rotation (X1); and
a controllable clutch arrangement (11) with a clutch device (42) which is configured to selectively establish or interrupt a torque transmission between the drive unit (6) and the power split unit (15), and with an actuating device (23) for actuating the clutch device (42);
**characterized in**
**that** the clutch device (42) is arranged coaxially to the intermediate shaft (13), and the opening (9) of the intermediate plate (5) has a clutch receptacle (12) on which at least one element of the clutch arrangement (11) is axially supported.

2. Drive assembly according to claim 1,
**characterized in**
**that** the intermediate shaft (13) is drivingly connected to the drive shaft (7) via a first gear stage (8, 10), and to the power split unit (15) via a second gear stage (14, 16), wherein
the clutch device (42) is arranged between the intermediate shaft (13) and one of the first gear stage (8, 10) and the second gear stage (14, 16), in the power path between the drive unit (6) and the power split unit (15).

3. Drive assembly according to any one of claims 1 to 2,
**characterized in**
**that** the clutch device (42) is arranged axially completely between a center plane (E4) of the first gear stage (8, 10) and a center plane (E5) of the second gear stage (14, 16).

4. Drive assembly according to any one of claims 2 or 3,
**characterized in**
**that** the clutch device (42) comprises a first clutch element (21) which is connected in a rotationally fixed manner to the intermediate shaft (13), and
a second clutch element (22), which is connected in a rotationally fixed manner to an element of the first gear stage (8, 10) or the second gear stage (14, 16) that is rotatably supported on the intermediate shaft (13),
wherein at least one of the first clutch element (21) and the second clutch element (22) is reversibly movable in the axial direction into an open position, in which the first clutch element (21) and the second clutch element (22) can rotate freely relative to each other about the second axis of rotation (X2), and into a closed position, in which the first clutch element (21) and the second clutch element (22) are connected to each other for torque transmission.

5. Drive assembly according to any one of claims 1 to 4,
**characterized in**
**that** the actuating device (23) comprises a controllable drive (40) and a transmission unit (43) for transmitting a force generated by the drive (40) to the clutch device (42).

6. Drive assembly according to claim 5,
**characterized in**
**that** the transmission unit (43) comprises a support element (24), which is axially supported on the clutch receptacle (12) of the intermediate plate (5), and a setting element (25) axially movable relative thereto, which is axially supported against one of the first clutch element and the second clutch element (22).

7. Drive assembly according to claim 6,
**characterized in**
**that** one of the first clutch element (21) and the second clutch element (22) is loaded by a return spring (27), and
is movable by the setting element (25) against a restoring force of the return spring (27).

8. Drive assembly according to any one of claims 1 to 7,
**characterized in**
**that** the clutch device (42) is configured as a dog clutch.

9. Drive assembly according to any one of claims 1 to 7,
**characterized in**
**that** the clutch device (42) is configured as a friction clutch, in particular as a multi-disc clutch.

10. Drive assembly according to any one of claims 1 to 9,
**characterized in**
**that** the intermediate plate (5) has a circumferential flange portion (37) via which the first housing element (3) and the second housing element (4) are connected to each other,
wherein a center plane (E1) of the flange portion is axially spaced from at least one of a center plane (E2) of the bearing seat (30) and a center plane (E3) of the clutch receptacle (12).

11. Drive assembly according to claim 10,
**characterized in**
**that** the center plane (E2) of the bearing seat (30) is arranged offset relative to the center plane (E1) of the flange portion (37) in a direction towards the power split unit (15).

12. Drive assembly according to any one of claims 10 or 11,
**characterized in**
**that** the center plane (E2) of the bearing seat (30) is arranged between the center plane (E1) of the flange portion (37) and the center plane (E3) of the clutch receptacle (12), or
**that** the center plane (E3) of the clutch receptacle (12) is arranged between the center plane (E1) of the flange portion (37) and the center plane (E2) of the bearing seat (30).

13. Drive assembly according to any one of claims 10 to 12,
**characterized in**
**that** at least one of the center plane (E2) of the bearing seat (30) and the center plane (E1) of the flange portion (37) is arranged with an axial overlap with at least one element of the clutch arrangement (11).

14. Drive assembly according to any one of claims 1 to 13,
**characterized in**
**that** a sealing element is arranged in the opening (9) of the intermediate plate (5).

15. Drive assembly according to any one of claims 1 to 14,
**characterized in**
**that** the clutch device (42) is arranged radially inside the actuating device (23).

## Revendications

1. Ensemble d'entraînement électrique pour entraîner un véhicule, comprenant :
un agencement de logement (2) avec un premier élément de logement (3) et un deuxième élément de logement (4), entre lesquels est disposée une plaque intermédiaire (5) ;
une unité d'entraînement (6) qui est reçue dans le premier élément de logement (3), comprenant un arbre moteur (7) qui peut être entraîné en rotation sur un premier axe de rotation (X1) ;
un agencement d'engrenages avec un arbre intermédiaire (13) qui est dirigé à travers une ouverture (9) de la plaque intermédiaire (5) et peut être entraîné en rotation par l'arbre moteur (7) sur un deuxième axe de rotation (X2) parallèle au premier axe de rotation (X1), et avec une unité de dérivation de puissance (15) qui est reliée en entraînement à l'arbre intermédiaire (13) et est positionnée en pouvant tourner sur un troisième axe de rotation (X3) coaxial au premier axe de rotation (X1) par un premier palier (18'') dans un siège de palier (30) de la plaque intermédiaire (5) et un second palier (19'') dans le deuxième élément de logement (4) ; et
un agencement d'accouplement pouvant être commandé (11) avec un dispositif d'accouplement (42) qui est conçu pour établir ou interrompre au choix une transmission de couple de rotation entre l'unité d'entraînement (6) et l'unité de dérivation de puissance (15), et avec un dispositif d'actionnement (23) pour actionner le dispositif d'accouplement (42) ;
**caractérisé en ce que**
le dispositif d'accouplement (42) est disposé coaxialement à l'arbre intermédiaire (13), et l'ouverture (9) de la plaque intermédiaire (5) présente un siège d'accouplement (12) sur lequel au moins un élément de l'agencement d'accouplement (11) est appuyé axialement.

2. Ensemble d'entraînement selon la revendication 1,
**caractérisé en ce que**
l'arbre intermédiaire (13) est relié en entraînement à l'arbre d'entraînement (7) par un premier étage d'engrenages (8, 10) et à l'unité de dérivation de puissance (15) par un second étage d'engrenages (14, 16), dans lequel
le dispositif d'accouplement (42) est disposé entre l'arbre intermédiaire (13) et un des premier étage d'engrenage (8, 10) et second étage d'engrenage (14, 16) dans le flux de puissance entre l'unité d'entraînement (6) et l'unité de dérivation de puissance (15).

3. Ensemble d'entraînement selon la revendication 1 ou 2,
**caractérisé en ce que**
le dispositif d'accouplement (42) est disposé complètement axialement entre un plan médian (E4) du premier étage d'engrenage (8, 10) et un plan médian (E5) du second étage d'engrenage (14, 16).

4. Ensemble d'entraînement selon l'une des revendications 2 ou 3,
**caractérisé en ce que**
le dispositif d'accouplement (42) présente un premier élément d'accouplement (21) qui est relié fixe en rotation à l'arbre intermédiaire (13), et
un second élément d'accouplement (22) qui est relié fixe en rotation à un élément du premier étage d'engrenage (8, 10) ou du second étage d'engrenage (14, 16) disposé en rotation sur l'arbre intermédiaire (13),
dans lequel au moins un du premier élément d'accouplement (21) et du deuxième élément d'accouplement (22) est mobile de manière réversible en sens axial dans une position ouverte dans laquelle le premier élément d'accouplement (21) et le deuxième élément d'accouplement (22) peuvent tourner librement l'un contre l'autre sur le deuxième axe de rotation (X2), et une position fermée dans laquelle le premier élément d'accouplement (21) et le deuxième élément d'accouplement (22) sont reliés entre eux pour transmettre le couple de rotation.

5. Ensemble d'entraînement selon l'une des revendications 1 à 4,
**caractérisé en ce que**
le dispositif d'actionnement (23) comprend un entraînement pouvant être commandé (40) et une unité de transmission (43) pour transmettre au dispositif d'accouplement (42) une force produite par l'entraînement (40).

6. Ensemble d'entraînement selon la revendication 5,
**caractérisé en ce que**
l'unité de transmission (43) présente un élément d'appui (24) qui est appuyé axialement sur le siège d'accouplement (12) de la plaque intermédiaire (5), et
un élément de commande (25) mobile axialement à cela, qui est appuyé axialement contre un du premier élément d'accouplement et du second élément d'accouplement (22) .

7. Ensemble d'entraînement selon la revendication 6,
**caractérisé en ce que**
un du premier élément d'accouplement (21) et du second élément d'accouplement (22) est sollicité par un ressort de rappel (27) et est mobile par l'élément de commande (25) contre une force de rappel du ressort de rappel (27).

8. Ensemble d'entraînement selon l'une des revendications 1 à 7,
**caractérisé en ce que**
le dispositif d'accouplement (42) est conçu en tant qu'accouplement à crabots.

9. Ensemble d'entraînement selon l'une des revendications 1 à 7,
**caractérisé en ce que**
le dispositif d'accouplement (42) est conçu en tant qu'accouplement à friction, en particulier en tant qu'accouplement à lamelles.

10. Ensemble d'entraînement selon l'une des revendications 1 à 9,
**caractérisé en ce que**
la plaque intermédiaire (5) présente un tronçon de flanc (37) périphérique par le biais duquel le premier élément de logement (3) et le deuxième élément de logement (4) sont reliés entre eux,
dans lequel un plan médian (E1) du tronçon de flanc présente un écart axial par rapport à au moins un d'un plan médian (E2) du siège de palier (30) et d'un plan médian (E3) du siège d'accouplement (12).

11. Ensemble d'entraînement selon la revendication 10,
**caractérisé en ce que**
le plan médian (E2) du siège de palier (30) est disposé décalé par rapport au plan médian (E1) du tronçon de flanc (37) dans le sens de l'unité de dérivation de puissance (15).

12. Ensemble d'entraînement selon l'une des revendications 10 ou 11,
**caractérisé en ce que**
le plan médian (E2) du siège de palier (30) est disposé entre le plan médian (E1) du tronçon de flanc (37) et le plan médian (E3) du siège d'accouplement (12) ou
que le plan médian (E3) du siège d'accouplement (12) est disposé entre le plan médian (E1) du tronçon de flanc (37) et le plan médian (E2) du siège de palier (30) .

13. Ensemble d'entraînement selon l'une des revendications 10 à 12,
**caractérisé en ce qu'**
au moins un du plan médian (E2) du siège de palier (30) et du plan médian (E1) du tronçon de flanc (37) est disposé en recouvrement axial avec au moins un élément de l'agencement d'accouplement (11).

14. Ensemble d'entraînement selon l'une des revendications 1 à 13,
**caractérisé en ce qu'**
un élément d'étanchéité est disposé dans l'ouverture (9) de la plaque intermédiaire (5).

15. Ensemble d'entraînement selon l'une des revendications 1 à 14,
**caractérisé en ce que**
le dispositif d'accouplement (42) est disposé radialement à l'intérieur du dispositif d'actionnement (23) .
